# EUROPEAN PATENT APPLICATION

(11) **EP 4 597 944 A1**
(43) Date of publication of application: **06.08.2025**
(21) Application number: 22959847.9
(22) Date of filing: 27.09.2022
(51) Int. Cl.: H04L 27/00, H04W 40/22

(54) **RELAY COMMUNICATION PROCESSING METHOD AND APPARATUS FOR TERMINAL DEVICE IN UE-TO-UE RELAY SCENARIO**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/121813
(87) International publication number: WO 2024/065198

(57) **Abstract**

Disclosed in embodiments of the present disclosure is a relay communication processing method for a terminal device in a UE-to-UE relay scenario. The method is executed by a first UE and comprises: acquiring a sidelink (SL) measurement between the first UE and a second UE, the SL measurement comprising an SL reference signal received power (SL-RSRP) and/or an SL discovery RSRP (SD-RSRP); according to the SL measurement between the first UE and the second UE and a predefined threshold, determining whether the first UE can become a relay UE; and in response to the first UE being able to become a relay UE, periodically broadcasting a notification message. By implementing the embodiments of the present disclosure, according to the acquired SL measurement between the first UE and the second UE and the predefined threshold, the first UE can determine whether the first UE itself can become a relay UE, so that whether a relay function can be provided for other UEs can be determined.

## Description

### FIELD

The present disclosure relates to the field of communication technologies, and more particularly to a method and apparatus for processing relay communication in a user equipment to user equipment (UE to UE) relay scenario.

### BACKGROUND

**In** the related art, a user equipment (UE) A may not be directly connected to a UE B, but the connection is realized through a relay of a UE C. The UE C that provides the relay function is a relay UE, and the above connected UEs communicate with each other via a sidelink unicast communication, and this architecture is called U2U (UE to UE) relay. To ensure the smooth operation of U2U relay, the UE C needs to determine whether it is able to serve as a relay UE that provides the relay function to other UEs.

### SUMMARY

Embodiments of the present disclosure provide a method and apparatus for processing relay communication in a user equipment to user equipment (UE to UE) relay scenario, which may be applied to internet of vehicles, e.g., vehicle to everything (V2X) communication, a long term evolution-vehicle (LTE-V), a vehicle to vehicle (V2V) communication, etc., or may be applied to intelligent driving, intelligent connected vehicles and other fields, so that the first UE can determine whether it is able to serve as the relay UE that provides the relay function to other UEs, and forward a discovery solicitation message sent by other UEs.

**In** a first aspect, embodiments of the present disclosure provide a method for processing relay communication in a user equipment to user equipment (UE to UE) relay scenario, which is performed by a first UE and includes: obtaining a sidelink measurement between the first UE and a second UE, in which the sidelink measurement includes sidelink reference signal receiving power (SL-RSRP) and/or sidelink-discovery reference signal receiving power (SD-RSRP); determining whether the first UE is able to serve as a relay UE, according to the sidelink measurement between the first UE and the second UE and a predefined threshold; and broadcasting a notification message periodically, in response to the first UE being able to serve as the relay UE.

In this technical solution, the first UE may determine whether it can serve as the relay UE according to a sidelink measurement obtained between the first UE and the second UE and the predefined threshold, and broadcast the notification message after determining that it can serve as the relay UE. Therefore, other UEs can use the relay function of the first UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold; and determining whether the first UE is able to serve as the relay UE according to the sidelink measurement between the first UE and the second UE and the predefined threshold includes: comparing the sidelink measurement between the first UE and the second UE with the first predefined threshold; and determining that the first UE is able to serve as the relay UE, in response to the sidelink measurement between the first UE and the second UE being greater than or equal to the first predefined threshold or the sidelink measurement between the first UE and the second UE being greater than the first predefined threshold by at least one hysteresis parameter value.

In this technical solution, the first UE may determine whether it can serve as the relay UE according to the sidelink measurement between the first UE and the second UE and the first predefined threshold, and broadcast the notification message after determining that it can serve as the relay UE. Therefore, other UEs can use the relay function of the first UE.

In an optional implementation, the predefined threshold is the second predefined threshold; and determining whether the first UE is able to serve as the relay UE according to the sidelink measurement between the first UE and the second UE and the predefined threshold includes: comparing the sidelink measurement between the first UE and the second UE with the second predefined threshold; and determining that the first UE is able to serve as the relay UE, in response to the sidelink measurement between the first UE and the second UE being less than or equal to the second predefined threshold or the sidelink measurement between the first UE and the second UE being less than the second predefined threshold by at least one hysteresis parameter value.

In this technical solution, the first UE may determine whether it can serve as the relay UE according to the sidelink measurement between the first UE and the second UE and the second predefined threshold, and broadcast the notification message after determining that it can serve as the relay UE. Therefore, other UEs can use the relay function of the first UE.

In an optional implementation, the predefined threshold includes the first predefined threshold and the second predefined threshold; and determining whether the first UE is able to serve as the relay UE according to the sidelink measurement between the first UE and the second UE and the predefined threshold includes: comparing the sidelink measurement between the first UE and the second UE with the first predefined threshold and the second predefined threshold; and determining that the first UE is able to serve as the relay UE, in response to the sidelink measurement between the first UE and the second UE being greater than or equal to the first predefined threshold and less than or equal to the second predefined threshold or the sidelink measurement between the first UE and the second UE being greater than the first predefined threshold by at least one hysteresis parameter value and less than the second predefined threshold by at least one hysteresis parameter value.

In this technical solution, the first UE may determine whether it can serve as the relay UE according to the sidelink measurement between the first UE and the second UE, the first predefined threshold, and the second predefined threshold, and broadcast the notification message after determining that it can serve as the relay UE. Therefore, other UEs can use the relay function of the first UE.

In a second aspect, embodiments of the present disclosure provide a method for processing relay communication in a user equipment to user equipment (UE to UE) relay scenario, which is performed by a first UE and includes: obtaining a sidelink measurement between the first UE and a second UE and/or a third UE, in which the sidelink measurement includes sidelink reference signal receiving power (SL-RSRP) and/or sidelink-discovery reference signal receiving power (SD-RSRP); determining whether the first UE is able to serve as a relay UE, according to the sidelink measurement between the first UE and the second UE and/or the sidelink measurement between the first UE and the third UE, and the predefined threshold; and forwarding a discovery solicitation message sent by the second UE, and/or forwarding a discovery response message sent by the third UE, in response to the first UE being able to serve as the relay UE.

In this technical solution, the first UE may determine whether it can serve as the relay UE according to the sidelink measurement between the first UE and the second UE and/or the third UE, and the predefined threshold, and forward a corresponding message of the second UE and/or the third UE after determining that it can serve as the relay UE. Therefore, other UEs can use the relay function of the first UE to perform the relay communication with the second UE and/or the third UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold; and determining whether the first UE is able to serve as the relay UE according to the sidelink measurement between the first UE and the second UE and/or the sidelink measurement between the first UE and the third UE, and the predefined threshold includes: comparing the sidelink measurement between the first UE and the second UE with the first predefined threshold, and/or comparing the sidelink measurement between the first UE and the third UE with the first predefined threshold; and determining that the first UE is able to serve as the relay UE, in response to the sidelink measurement between the first UE and the second UE being greater than or equal to the first predefined threshold and/or the sidelink measurement between the first UE and the third UE being greater than or equal to the first predefined threshold; or determining that the first UE is able to serve as the relay UE, in response to the sidelink measurement between the first UE and the second UE being greater than the first predefined threshold by at least one hysteresis parameter value and/or the sidelink measurement between the first UE and the third UE being greater than the first predefined threshold by at least one hysteresis parameter value.

In this technical solution, the first UE may determine whether it can serve as the relay UE according to the sidelink measurement between the first UE and the second UE and/or the third UE, and the first predefined threshold, and forward a corresponding message of the second UE and/or the third UE after determining that it can serve as the relay UE. Therefore, other UEs can use the relay function of the first UE to perform the relay communication with the second UE and/or the third UE.

In an optional implementation, the predefined threshold is the second predefined threshold; and determining whether the first UE is able to serve as the relay UE according to the sidelink measurement between the first UE and the second UE and/or the sidelink measurement between the first UE and the third UE, and the predefined threshold includes: comparing the sidelink measurement between the first UE and the second UE with the second predefined threshold, and/or comparing the sidelink measurement between the first UE and the third UE with the second predefined threshold; and determining that the first UE is able to serve as the relay UE, in response to the sidelink measurement between the first UE and the second UE being less than or equal to the second predefined threshold and/or the sidelink measurement between the first UE and the third UE being less than or equal to the second predefined threshold; or determining that the first UE is able to serve as the relay UE, in response to the sidelink measurement between the first UE and the second UE being less than the second predefined threshold by at least one hysteresis parameter value and/or the sidelink measurement between the first UE and the third UE being less than the second predefined threshold by at least one hysteresis parameter value.

In this technical solution, the first UE may determine whether it can serve as the relay UE according to the sidelink measurement between the first UE and the second UE and/or the third UE, and the second predefined threshold, to determine whether it can provide the relay function for other UEs.

In an optional implementation, the predefined threshold includes the first predefined threshold and the second predefined threshold; and determining whether the first UE is able to serve as the relay UE according to the SL-RSRP or the SD-RSRP obtained, and the predefined threshold includes: comparing the sidelink measurement between the first UE and the second UE with the first predefined threshold and the second predefined threshold, and/or comparing the sidelink measurement between the first UE and the third UE with the first predefined threshold and the second predefined threshold; and determining that the first UE is able to serve as the relay UE, in response to the sidelink measurement between the first UE and the second UE being greater than or equal to the first predefined threshold and less than or equal to the second predefined threshold and/or the sidelink measurement between the first UE and the third UE being greater than or equal to the first predefined threshold and less than or equal to the second predefined threshold; or determining that the first UE is able to serve as the relay UE, in response to the sidelink measurement between the first UE and the second UE being greater than the first predefined threshold by at least one hysteresis parameter value and less than the second predefined threshold by at least one hysteresis parameter value and/or the sidelink measurement between the first UE and the third UE being greater than the first predefined threshold by at least one hysteresis parameter value and less than the second predefined threshold by at least one hysteresis parameter value.

In this technical solution, the first UE may determine whether it can serve as the relay UE according to the sidelink measurement between the first UE and the second UE and/or the third UE, the first predefined threshold, and the second predefined threshold, and forward a corresponding message of the second UE and/or the third UE after determining that it can serve as the relay UE. Therefore, other UEs can use the relay function of the first UE to perform the relay communication with the second UE and/or the third UE.

In a third aspect, embodiments of the present disclosure provide a communication device, including: a transceiver module configured to obtain a sidelink measurement between the first UE and the second UE, in which the sidelink measurement includes the SL-RSRP and/or the SD-RSRP; and a processing module configured to determine whether the first UE is able to serve as a relay UE, according to the sidelink measurement between the first UE and the second UE and a predefined threshold; and broadcast a notification message periodically, in response to the first UE being able to serve as the relay UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold, and the processing module is specifically configured to compare the sidelink measurement between the first UE and the second UE with the first predefined threshold; and determine that the first UE is able to serve as the relay UE, in response to the sidelink measurement between the first UE and the second UE being greater than or equal to the first predefined threshold or the sidelink measurement between the first UE and the second UE being greater than the first predefined threshold by at least one hysteresis parameter value.

In an optional implementation, the predefined threshold is the second predefined threshold, and the processing module is specifically configured to compare the sidelink measurement between the first UE and the second UE with the second predefined threshold; and determine that the first UE is able to serve as the relay UE, in response to the sidelink measurement between the first UE and the second UE being less than or equal to the second predefined threshold or the sidelink measurement between the first UE and the second UE being less than the second predefined threshold by at least one hysteresis parameter value.

In an optional implementation, the predefined threshold includes the first predefined threshold and the second predefined threshold, and the processing module is specifically configured to compare the sidelink measurement between the first UE and the second UE with the first predefined threshold and the second predefined threshold; and determine that the first UE is able to serve as the relay UE, in response to the sidelink measurement between the first UE and the second UE being greater than or equal to the first predefined threshold and less than or equal to the second predefined threshold or the sidelink measurement between the first UE and the second UE being greater than the first predefined threshold by at least one hysteresis parameter value and less than the second predefined threshold by at least one hysteresis parameter value.

In a fourth aspect, embodiments of the present disclosure provide a communication device, including: a transceiver module configured to obtain a sidelink measurement between the first UE and the second UE and/or the third UE, in which the sidelink measurement includes the SL-RSRP and/or the SD-RSRP; and a processing module configured to determine whether the first UE is able to serve as a relay UE, according to the sidelink measurement between the first UE and the second UE and/or the sidelink measurement between the first UE and the third UE, and a predefined threshold; and forward a discovery solicitation message sent by the second UE, and/or forward a discovery response message sent by the third UE, in response to the first UE being able to serve as the relay UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold; and the processing module is specifically configured to compare the sidelink measurement between the first UE and the second UE with the first predefined threshold, and/or compare the sidelink measurement between the first UE and the third UE with the first predefined threshold; determine that the first UE is able to serve as the relay UE, in response to the sidelink measurement between the first UE and the second UE being greater than or equal to the first predefined threshold and/or the sidelink measurement between the first UE and the third UE being greater than or equal to the first predefined threshold; or determine that the first UE is able to serve as the relay UE, in response to the sidelink measurement between the first UE and the second UE being greater than the first predefined threshold by at least one hysteresis parameter value and/or the sidelink measurement between the first UE and the third UE being greater than the first predefined threshold by at least one hysteresis parameter value.

In an optional implementation, the predefined threshold is the second predefined threshold; and the processing module is specifically configured to compare the sidelink measurement between the first UE and the second UE with the second predefined threshold, and/or compare the sidelink measurement between the first UE and the third UE with the second predefined threshold; determine that the first UE is able to serve as the relay UE, in response to the sidelink measurement between the first UE and the second UE being less than or equal to the second predefined threshold and/or the sidelink measurement between the first UE and the third UE being less than or equal to the second predefined threshold; or determine that the first UE is able to serve as the relay UE, in response to the sidelink measurement between the first UE and the second UE being less than the second predefined threshold by at least one hysteresis parameter value and/or the sidelink measurement between the first UE and the third UE being less than the second predefined threshold by at least one hysteresis parameter value.

In an optional implementation, the predefined threshold includes the first predefined threshold and the second predefined threshold; and the processing module is specifically configured to compare the sidelink measurement between the first UE and the second UE with the first predefined threshold and the second predefined threshold, and/or compare the sidelink measurement between the first UE and the third UE with the first predefined threshold and the second predefined threshold; determine whether the first UE is able to serve as the relay UE, in response to the sidelink measurement between the first UE and the second UE being greater than or equal to the first predefined threshold and less than or equal to the second predefined threshold and/or the sidelink measurement between the first UE and the third UE being greater than or equal to the first predefined threshold and less than or equal to the second predefined threshold; or determine that the first UE is able to serve as the relay UE, in response to the sidelink measurement between the first UE and the second UE being greater than the first predefined threshold by at least one hysteresis parameter value and less than the second predefined threshold by at least one hysteresis parameter value and/or the sidelink measurement between the first UE and the third UE being greater than the first predefined threshold by at least one hysteresis parameter value and less than the second predefined threshold by at least one hysteresis parameter value.

In a fifth aspect, embodiments of the present disclosure provide a communication device includes a processor that performs the method of the first aspect when the processor invokes a computer program in a memory.

In a sixth aspect, embodiments of the present disclosure provide a communication device includes a processor that performs the method of the second aspect when the processor invokes a computer program in a memory.

In a seventh aspect, embodiments of the present disclosure provide a communication device including a processor and a memory storing a computer program; and the processor executes the computer program stored in the memory to cause the communication device to perform the method in the first aspect described above.

In an eighth aspect, embodiments of the present disclosure provide a communication device including a processor and a memory storing a computer program; and the processor executes the computer program stored in the memory to cause the communication device to perform the method in the second aspect described above.

In a ninth aspect, embodiments of the present disclosure provide a communication device including a processor and an interface circuit configured to receive code instructions and transmit the code instructions to the processor, and the processor is configured to run the code instructions to cause the device to perform the method of the first aspect described above.

In a tenth aspect, embodiments of the present disclosure provide a communication device including a processor and an interface circuit configured to receive code instructions and transmit the code instructions to the processor, and the processor is configured to run the code instructions to cause the device to perform the method of the second aspect described above.

In an eleventh aspect, embodiments of the present disclosure provide a computer-readable storage medium configured to store instructions for use by the terminal device to cause the terminal device to perform the method of the first aspect described above when the instructions are executed.

In a twelfth aspect, embodiments of the present disclosure provide a computer-readable storage medium configured to store instructions for use by the network side device to cause the network side device to perform the method of the second aspect described above when the instructions are executed.

In a thirteenth aspect, the present disclosure further provides a computer program product including a computer program that, when run on a computer, causes the computer to perform the method in the first aspect described above.

In a fourteenth aspect, the present disclosure further provides a computer program product including a computer program that, when run on a computer, causes the computer to perform the method in the second aspect described above.

In a fifteenth aspect, the present disclosure provides a chip system including at least one processor and an interface configured to support the terminal device to implement the functions involved in the first aspect, for example, determining or processing at least one of the data and information involved in the method described above. In a possible design, the chip system further includes a memory, and the memory is configured to store a computer program and data necessary for the terminal device. The chip system may be composed of a chip or may include a chip and other discrete devices.

In a sixteenth aspect, the present disclosure provides a chip system including at least one processor and an interface configured to support the network side device to implement the functions involved in the second aspect, for example, determining or processing at least one of the data and information involved in the method described above. In a possible design, the chip system further includes a memory, and the memory is configured to store a computer program and data necessary for the network side device. The chip system may be composed of a chip or may include a chip and other discrete devices.

In a seventeenth aspect, the present disclosure provides a computer program that, when run on a computer, causes the computer to perform the method in the first aspect described above.

In an eighteenth aspect, the present disclosure provides a computer program that, when run on a computer, causes the computer to perform the method in the second aspect described above.

### BRIEF DESCRIPTION OF THE DRAWINGS

In order to more clearly illustrate the technical solutions in embodiments or background art of the present disclosure, the accompanying drawings to be used in the embodiments or background art of the present disclosure will be described below.
FIG. 1 is a schematic diagram of an architecture of a communication system provided by an embodiment of the present disclosure;
FIG. 2 is a schematic flowchart of a method for processing relay communication in a user equipment to user equipment (UE to UE) relay scenario provided by an embodiment of the present disclosure;
FIG. 3 is a schematic flowchart of another method for processing relay communication in a user equipment to user equipment (UE to UE) relay scenario provided by an embodiment of the present disclosure;
FIG. 4 is a schematic flowchart of yet another method for processing relay communication in a user equipment to user equipment (UE to UE) relay scenario provided by an embodiment of the present disclosure;
FIG. 5 is a schematic flowchart of yet another method for processing relay communication in a user equipment to user equipment (UE to UE) relay scenario provided by an embodiment of the present disclosure;
FIG. 6 is a schematic flowchart of yet another method for processing relay communication in a user equipment to user equipment (UE to UE) relay scenario provided by an embodiment of the present disclosure;
FIG. 7 is a schematic flowchart of yet another method for processing relay communication in a user equipment to user equipment (UE to UE) relay scenario provided by an embodiment of the present disclosure;
FIG. 8 is a schematic flowchart of yet another method for processing relay communication in a user equipment to user equipment (UE to UE) relay scenario provided by an embodiment of the present disclosure;
FIG. 9 is a schematic flowchart of yet another method for processing relay communication in a user equipment to user equipment (UE to UE) relay scenario provided by an embodiment of the present disclosure;
FIG. 10 is a structural block diagram of a communication device provided by an embodiment of the present disclosure;
FIG. 11 is a structural block diagram of another communication device provided by an embodiment of the present disclosure; and
FIG. 12 is a schematic block diagram of a chip provided by an embodiment of the present disclosure.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure. In the description of the present disclosure, unless otherwise indicated, "/" means or, for example, A/B can mean either A or B; "and/or" herein is merely a description of an associative relationship of an associated objects, indicating that three types of relationships can exist, for example, A and/or B can mean that A exists alone, A and B exist at the same time, and B exists alone.

For a user equipment to user equipment (UE to UE, U2U) scenario, there are currently two modes of sending discovery solicitation message, namely, model A and model B. In mode A, one or more relay UEs periodically broadcast a notification message that carries an address of the target terminal, and a source remote UE can listen to the notification message. In mode B, one or more relay UEs forward a discovery solicitation message sent by the source remote UE. For mode A, the terminal device needs to first determine whether it can serve as the relay UE and broadcast a notification message periodically after determining that it can serve as the relay UE. For mode B, the terminal device also needs to first determine whether it can serve as the relay UE and forward a discovery solicitation message sent by the source remote UE after determining that it can serve as the relay UE.

In order to better understand a method for processing relay communication in a user equipment to user equipment (UE to UE) disclosed by embodiments of the present disclosure, and a communication system to which embodiments of the present disclosure apply is first described below.

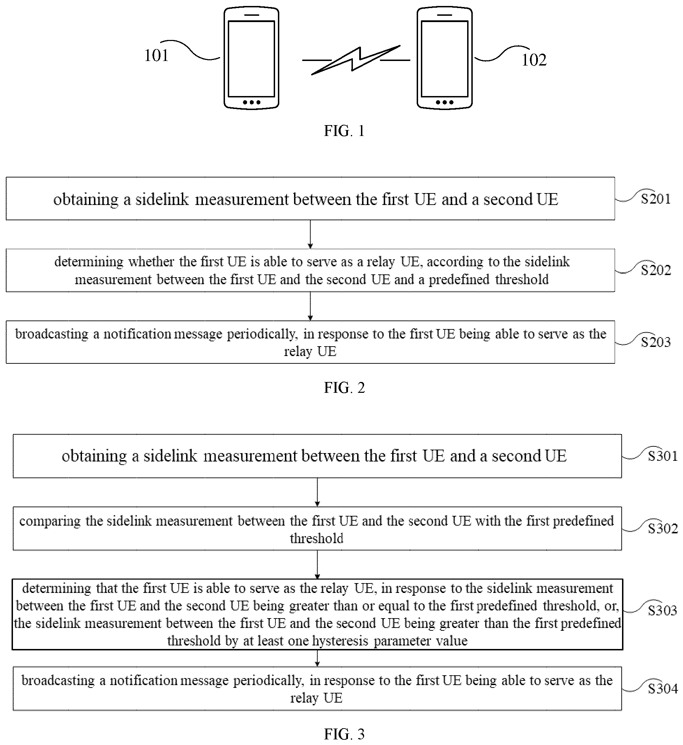

Referring to FIG. 1, FIG. 1 is a schematic diagram of an architecture of a communication system provided by an embodiment of the present application. The communication system may include, but is not limited to, a first UE and a second UE, and the number and form of the devices shown in FIG. 1 are for illustrative purposes only and do not constitute a limitation of the embodiments of the present application, which may include two or more first UEs and two or more second UEs in practical applications. For example, the communication system shown in FIG. 1 includes a first UE 101 and a second UE 102.

It should be noted that the technical solutions of the embodiments of the present application can be applied to various communication systems. Examples include long term evolution (LTE) systems, fifth generation (5G) mobile communication systems, 5G new radio (NR) systems, or other future new mobile communication systems.

The first UE 101 and the second UE 102 in embodiments of the present disclosure is an entity on the user side used to receive or transmit signals, such as a mobile phone. The terminal device can also be referred to as a terminal, user equipment (UE), mobile station (MS), mobile terminal (MT) and so on. The terminal device may be a vehicle with communication function, a smart vehicle, a mobile phone, a wearable device, a tablet computer (Pad), a computer with wireless transceiving function, a virtual reality (VR) terminal device, an augmented reality (AR) terminal device, a wireless terminal device for industrial control, a wireless terminal device for self-driving, a wireless terminal device for remote medical surgery, a wireless terminal device for smart grid, a wireless terminal device for transportation security, a wireless terminal device for smart city, a wireless terminal device for smart home, and so on. The embodiments of the present application do not limit the specific technology and the specific device form used for the terminal device.

It is to be understood that the communication system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new business scenarios, the technical solutions provided by embodiments of the present disclosure are equally applicable to similar technical problems.

The method and apparatus for processing relay communication in a user equipment to user equipment (UE to UE) relay scenario provided by the present disclosure will be described in detail below in conjunction with the accompanying drawings.

Referring to FIG. 2, FIG. 2 is a schematic flowchart of a method for processing relay communication in a user equipment to user equipment (UE to UE) relay scenario provided by an embodiment of the present disclosure. The method is performed by the first UE. As illustrated in FIG. 2, the method may include, but is not limited to, the following steps, which is preferably applied in the mode A scenario.

In step S201: a sidelink measurement between a first UE and a second UE is obtained.

In embodiments of the present disclosure, the sidelink measurement includes sidelink reference signal receiving power (SL-RSRP) and/or sidelink-discovery reference signal receiving power (SD-RSRP).

As an example, the first UE obtains the SL-RSRP with the second UE.

As another example, the first UE obtains the SD-RSRP with the second UE.

As yet another example, the first UE obtains the SL-RSRP and the SD-RSRP with the second UE.

It should be noted that, in embodiments of the present disclosure, the first UE is a UE that needs to determine whether it can serve as a relay UE in the UE to UE relay scenario, the second UE is a source remote UE or a target remote UE in the UE to UE relay scenario, and one or more second UEs may be provided.

In step S202: it is determined whether the first UE is able to serve as a relay UE, according to the sidelink measurement between the first UE and the second UE and a predefined threshold.

Example 1, taking the sidelink measurement between the first UE and the second UE being the SL-RSRP as an example, the SL-RSRP is compared with the predefined threshold to obtain a comparison result, and it is determined that the first UE may serve as the relay UE, in response to the comparison result satisfying a preset condition, it is determined that the first UE may not serve as the relay UE, in response to the comparison result not satisfying the preset condition.

Example 2, taking the sidelink measurement between the first UE and the second UE being the SD-RSRP as an example, the SD-RSRP is compared with the predefined threshold to obtain a comparison result, and it is determined that the first UE may serve as the relay UE, in response to the comparison result satisfying a preset condition, it is determined that the first UE may not serve as the relay UE, in response to the comparison result not satisfying the preset condition.

Example 3, when the sidelink measurement includes the SL-RSRP and the SD-RSRP, the first UE may randomly select one of the SL-RSRP and the SD-RSRP, depending on an implementation, and, based on a selection result, perform the same procedures as in Example 1 or Example 2 described above.

It should be noted that, in embodiments of the present disclosure, the above predefined threshold may be configured by the network side device, may be pre-configured, or may be obtained from a discovery solicitation signal sent by the source remote UE.

As an example, the first UE may obtain the predefined threshold described above based on dedicated radio resource control (RRC) signaling or signaling in band (SIB) sent by the network side device.

As another example, different predefined thresholds may be configured for different relay service codes (RSCs) in advance, the source remote UE may carry the RSCs in the sent discovery solicitation signal, so that the first UE may set a corresponding predefined threshold according to the received discovery solicitation signal.

In step S203: a notification message is periodically broadcast, in response to the first UE being able to serve as the relay UE.

By way of example, in response to the first UE being able to serve as the relay UE, a notification message is periodically broadcast; and optionally, the notification message carries a discovery signal type, a user information identifier of the relay UE, a relay service code, a source address of a target remote terminal, and the like.

By implementing embodiments of the present disclosure, the first UE may determine whether it can serve as the relay UE according to a sidelink measurement obtained between the first UE and the second UE and the predefined threshold, and broadcast the notification message after determining that it can serve as the relay UE. Therefore, other UEs can use the relay function of the first UE.

In some embodiments of the present disclosure, when a plurality of second UEs are provided, determining whether the first UE is able to serve as the relay UE according to the sidelink measurement between the first UE and the second UE and the predefined threshold may include: comparing the sidelink measurements between the first UE and the plurality of second UEs with the predefined threshold, respectively; and determining that the first UE is able to serve as the relay UE, in response to the sidelink measurements between the first UE and at least one or at least N of the plurality of second UEs and the predefined threshold satisfying a specific threshold condition, where N is an integer greater than 1.

It should be noted that, in embodiments of the present disclosure, a specific value of N may be configured by the network side device, may be pre-configured, may be obtained from a discovery solicitation signal sent by the source remote UE, or may be determined by the UE implementation.

As an example, the first UE may obtain the specific value of N based on a dedicated RRC or SIB sent by the network side device.

As another example, different quantity values may be configured for different relay service codes (RSCs) in advance, the source remote UE may carry the RSCs in the sent discovery solicitation signal, so that the first UE may obtain the specific value of N according to the received discovery solicitation signal.

As another example, the first UE may determine the specific value of N based on the UE implementation.

As an example, the first UE compares the sidelink measurement with each second UE with the predefined threshold, respectively; and determines that the first UE is able to serve as the relay UE, in response to the sidelink measurement between the first UE and at least one second UE and the predefined threshold satisfying a specific threshold condition.

As another example, the specific value of N is 2, the first UE compares the sidelink measurement with each second UE with the predefined threshold, respectively; and determines that the first UE is able to serve as the relay UE, in response to the sidelink measurements between the first UE and two or more second UEs (e.g., three) and the predefined threshold satisfying the specific threshold condition.

In an optional implementation of embodiments of the present disclosure, the predefined threshold includes the first predefined threshold, the first UE may determine whether the first UE is able to serve as a relay UE, according to the sidelink measurement between the first UE and the second UE and a first predefined threshold. As an example, referring to FIG. 3, FIG. 3 is a schematic flowchart of another method for processing relay communication in a user equipment to user equipment (UE to UE) relay scenario provided by an embodiment of the present disclosure. The method is performed by the first UE. As illustrated in FIG. 3, the method may include, but is not limited to, the following steps, which is preferably applied in the mode A scenario.

In step S301: a sidelink measurement between a first UE and a second UE is obtained.

In embodiments of the present disclosure, step S301 may be realized in any one of the embodiments of the present disclosure, and embodiments of the present disclosure do not limit this, which will not be repeated.

In step S302: the sidelink measurement between the first UE and the second UE is compared with the first predefined threshold.

Example 4, taking the sidelink measurement between the first UE and the second UE being the SL-RSRP as an example, the SL-RSRP is compared with the first predefined threshold.

Example 5, taking the sidelink measurement between the first UE and the second UE being the SD-RSRP as an example, the SD-RSRP is compared with the first predefined threshold.

Example 6, when the sidelink measurement includes the SL-RSRP and the SD-RSRP, the first UE may randomly select one of the SL-RSRP and the SD-RSRP, depending on an implementation, and, based on a selection result, perform the same procedures as in Example 4 or Example 5 described above.

In step S303: it is determined that the first UE is able to serve as the relay UE, in response to the sidelink measurement between the first UE and the second UE being greater than or equal to the first predefined threshold or the sidelink measurement between the first UE and the second UE being greater than the first predefined threshold by at least one hysteresis parameter value.

As an example, it is determined that the first UE is able to serve as the relay UE, in response to the sidelink measurement between the first UE and the second UE being greater than or equal to the first predefined threshold.

As another example, it is determined that the first UE is able to serve as the relay UE, in response to the sidelink measurement between the first UE and the second UE being greater than the first predefined threshold by at least one hysteresis parameter value.

It should be noted that in embodiments of the present disclosure, being greater than the first predefined threshold by at least one hysteresis parameter value refers to being greater than the first predefined threshold by one preset hysteresis or even greater.

In another implementation of embodiments of the present disclosure, it is determined that the first UE is not able to serve as the relay UE, in response to the sidelink measurement between the first UE and the second UE being less than the first predefined threshold.

In step S304: a notification message is periodically broadcast, in response to the first UE being able to serve as the relay UE.

In embodiments of the present disclosure, step S304 may be realized in any one of the embodiments of the present disclosure, and embodiments of the present disclosure do not limit this, which will not be repeated.

By implementing embodiments of the present disclosure, the first UE may determine whether it can serve as the relay UE according to a sidelink measurement between the first UE and the second UE and the first predefined threshold, and broadcast the notification message after determining that it can serve as the relay UE. Therefore, other UEs can use the relay function of the first UE.

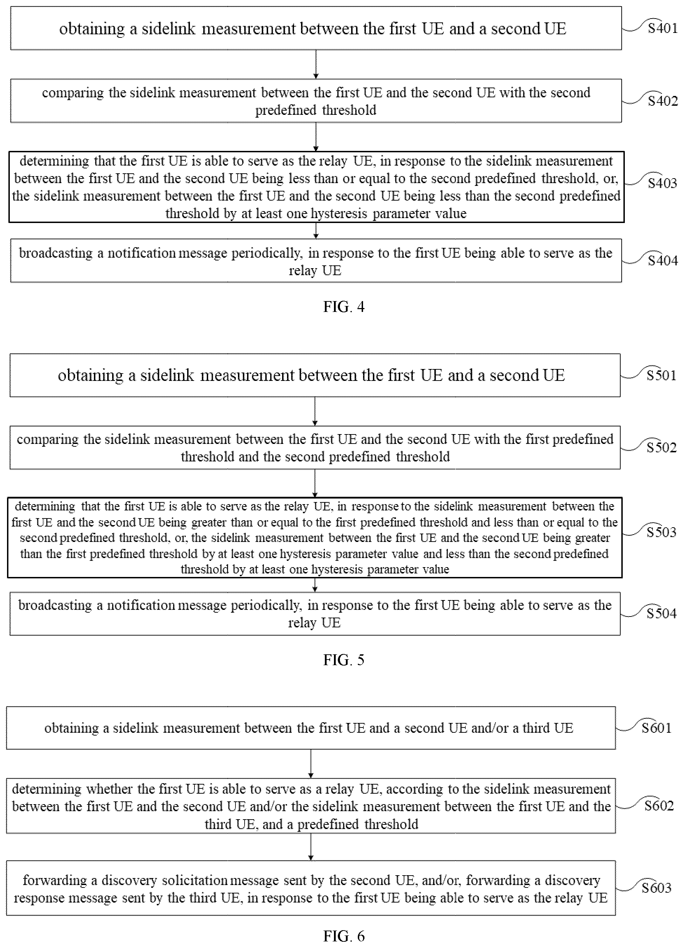

In an optional implementation of embodiments of the present disclosure, the predefined threshold is the second predefined threshold, the first UE may determine whether the first UE is able to serve as a relay UE, according to the sidelink measurement between the first UE and the second UE and a second predefined threshold. As an example, referring to FIG. 4, FIG. 4 is a schematic flowchart of yet another method for processing relay communication in a user equipment to user equipment (UE to UE) relay scenario provided by an embodiment of the present disclosure. The method is performed by the first UE. As illustrated in FIG. 4, the method may include, but is not limited to, the following steps, which is preferably applied in the mode A scenario.

In step S401: a sidelink measurement between a first UE and a second UE is obtained.

In embodiments of the present disclosure, step S401 may be realized in any one of the embodiments of the present disclosure, and embodiments of the present disclosure do not limit this, which will not be repeated.

In step S402: the sidelink measurement between the first UE and the second UE is compared with the second predefined threshold.

Example 7, taking the sidelink measurement between the first UE and the second UE being the SL-RSRP as an example, the SL-RSRP is compared with the second predefined threshold.

Example 8, taking the sidelink measurement between the first UE and the second UE being the SD-RSRP as an example, the SD-RSRP is compared with the second predefined threshold.

Example 9, when the sidelink measurement includes the SL-RSRP and the SD-RSRP, the first UE may randomly select one of the SL-RSRP and the SD-RSRP, depending on an implementation, and, based on a selection result, perform the same procedures as in Example 7 or Example 8 described above.

In step S403: it is determined that the first UE is able to serve as the relay UE, in response to the sidelink measurement between the first UE and the second UE being less than or equal to the second predefined threshold or the sidelink measurement between the first UE and the second UE being less than the first predefined threshold by at least one hysteresis parameter value.

As an example, it is determined that the first UE is able to serve as the relay UE, in response to the sidelink measurement between the first UE and the second UE being less than or equal to the second predefined threshold.

As another example, it is determined that the first UE is able to serve as the relay UE, in response to the sidelink measurement between the first UE and the second UE being less than the second predefined threshold by at least one hysteresis parameter value.

It should be noted that in embodiments of the present disclosure, being less than the second predefined threshold by at least one hysteresis parameter value refers to being less than the second predefined threshold by one preset hysteresis or even less.

In another implementation of embodiments of the present disclosure, it is determined that the first UE is not able to serve as the relay UE, in response to the sidelink measurement between the first UE and the second UE being greater than the second predefined threshold.

In step S404: a notification message is periodically broadcast, in response to the first UE being able to serve as the relay UE.

In embodiments of the present disclosure, step S404 may be realized in any one of the embodiments of the present disclosure, and embodiments of the present disclosure do not limit this, which will not be repeated.

By implementing embodiments of the present disclosure, the first UE may determine whether it can serve as the relay UE according to a sidelink measurement between the first UE and the second UE and the second predefined threshold, and broadcast the notification message after determining that it can serve as the relay UE. Therefore, other UEs can use the relay function of the first UE.

In an optional implementation of embodiments of the present disclosure, the predefined threshold includes the first predefined threshold and the second predefined threshold, the first UE may determine whether the first UE is able to serve as a relay UE, according to the sidelink measurement between the first UE and the second UE, a first predefined threshold, and a second predefined threshold. As an example, referring to FIG. 5, FIG. 5 is a schematic flowchart of yet another method for processing relay communication in a user equipment to user equipment (UE to UE) relay scenario provided by an embodiment of the present disclosure. The method is performed by the first UE. As illustrated in FIG. 5, the method may include, but is not limited to, the following steps, which is preferably applied in the mode A scenario.

In step S501: a sidelink measurement between a first UE and a second UE is obtained.

In embodiments of the present disclosure, step S501 may be realized in any one of the embodiments of the present disclosure, and embodiments of the present disclosure do not limit this, which will not be repeated.

In step S502: the sidelink measurement between the first UE and the second UE is compared with the first predefined threshold and the second predefined threshold.

Example 10, taking the sidelink measurement between the first UE and the second UE being the SL-RSRP as an example, the SL-RSRP is compared with the first predefined threshold and the second predefined threshold.

Example 11, taking the sidelink measurement between the first UE and the second UE being the SD-RSRP as an example, the SD-RSRP is compared with the first predefined threshold and the second predefined threshold.

Example 12, when the sidelink measurement includes the SL-RSRP and the SD-RSRP, the first UE may randomly select one of the SL-RSRP and the SD-RSRP, depending on an implementation, and, based on a selection result, perform the same procedures as in Example 10 or Example 11 described above.

In step S503, it is determined that the first UE is able to serve as the relay UE, in response to the sidelink measurement between the first UE and the second UE being greater than or equal to the first predefined threshold and less than or equal to the second predefined threshold or the sidelink measurement between the first UE and the second UE being greater than the first predefined threshold by at least one hysteresis parameter value and less than the second predefined threshold by at least one hysteresis parameter value.

As an example, it is determined that the first UE is able to serve as the relay UE, in response to the sidelink measurement between the first UE and the second UE being greater than or equal to the first predefined threshold and less than or equal to the second predefined threshold.

As another example, it is determined that the first UE is able to serve as the relay UE, in response to the sidelink measurement between the first UE and the second UE being greater than the first predefined threshold by at least one hysteresis parameter value and less than the second predefined threshold by at least one hysteresis parameter value.

It should be noted that in embodiments of the present disclosure, the hysteresis parameter value corresponding to the first predefined threshold and the hysteresis parameter value corresponding to the second predefined threshold may be the same or different.

In step S504: a notification message is periodically broadcast, in response to the first UE being able to serve as the relay UE.

In embodiments of the present disclosure, step S504 may be realized in any one of the embodiments of the present disclosure, and embodiments of the present disclosure do not limit this, which will not be repeated.

By implementing embodiments of the present disclosure, the first UE may determine whether it can serve as the relay UE according to a sidelink measurement between the first UE and the second UE, the first predefined threshold, and the second predefined threshold, and broadcast the notification message after determining that it can serve as the relay UE. Therefore, other UEs can use the relay function of the first UE.

The method for processing relay communication in a user equipment to user equipment (UE to UE) relay scenario provided by the present disclosure is introduced from the perspective from the first UE and the second UE in the above embodiments. The method for processing relay communication in a user equipment to user equipment (UE to UE) relay scenario provided by the present disclosure will be further introduced below from the perspective of the first UE and a source remote UE (i.e., the second UE in the following embodiments), and/or a target remote UE (i.e., the third UE in the following embodiments).

Referring to FIG. 6, FIG. 6 is yet another method for processing relay communication in a user equipment to user equipment (UE to UE) relay scenario provided by an embodiment of the present disclosure, and the method is performed by the first UE. As illustrated in FIG. 6, the method may include, but is not limited to, the following steps, which is preferably applied in the mode B scenario.

In step S601: a sidelink measurement between a first UE and a second UE and/or a third UE is obtained.

The sidelink measurement includes SL-RSRP and/or SD-RSRP.

As an example, the first UE obtains the SL-RSRP with the second UE.

As another example, the first UE obtains the SD-RSRP with the second UE.

As yet another example, the first UE obtains the SL-RSRP and the SD-RSRP with the second UE.

As yet another example, the first UE obtains the SL-RSRP with the third UE.

As yet another example, the first UE obtains the SD-RSRP with the third UE.

As yet another example, the first UE obtains the SL-RSRP and the SD-RSRP with the third UE.

It should be noted that, in embodiments of the present disclosure, the second UE is a source remote UE in the UE to UE relay scenario, and the third UE is a target remote UE in the UE to UE relay scenario.

In step S602, it is determined whether the first UE is able to serve as a relay UE, according to the sidelink measurement between the first UE and the second UE and/or the sidelink measurement between the first UE and the third UE, and a predefined threshold.

As an example, taking the sidelink measurement obtained between the first UE and the second UE as an example, the sidelink measurement is compared with the predefined threshold to obtain a comparison result, and it is determined that the first UE may serve as the relay UE, in response to the comparison result satisfying a preset condition (e.g., the sidelink measurement being greater than or equal to the predefined threshold, or the sidelink measurement being less than the predefined threshold), it is determined that the first UE may not serve as the relay UE, in response to the comparison result not satisfying the preset condition.

As another example, taking the sidelink measurement obtained between the first UE and the third UE as an example, the sidelink measurement is compared with the predefined threshold to obtain a comparison result, and it is determined that the first UE may serve as the relay UE, in response to the comparison result satisfying a preset condition, it is determined that the first UE may not serve as the relay UE, in response to the comparison result not satisfying the preset condition.

As yet another example, taking a first sidelink measurement obtained between the first UE and the second UE and a second sidelink measurement obtained between the first UE and the third UE as an example, the first sidelink measurement is compared with the predefined threshold to obtain a first comparison result, the second sidelink measurement is compared with the predefined threshold to obtain a second comparison result, and it is determined that the first UE may serve as the relay UE, in response to the first comparison result and the second comparison result satisfying a corresponding preset condition, otherwise it is determined that the first UE may not serve as the relay UE.

It should be noted that, in embodiments of the present disclosure, when the obtained sidelink measurement includes the SL-RSRP and the SD-RSRP, the first terminal may randomly select one of the SL-RSRP and the SD-RSRP, depending on the implementation, to perform the steps of determining whether the first UE is able to serve as a relay UE, according to the sidelink measurement between the first UE and the second UE and/or the sidelink measurement between the first UE and the third UE, and a predefined threshold.

In an implementation of embodiments of the present disclosure, the predefined threshold includes a first predefined threshold and/or a second predefined threshold, the first predefined threshold is a minimum threshold, and the second predefined threshold is a maximum threshold.

As an example, the predefined threshold includes a first predefined threshold, and the first predefined threshold is a minimum threshold of the sidelink measurement between the first UE and the second UE.

As another example, the predefined threshold includes a second predefined threshold, and the second predefined threshold is a maximum threshold of the sidelink measurement between the first UE and the second UE.

As yet another example, the predefined threshold includes a first predefined threshold and a second predefined threshold, the first predefined threshold is a minimum threshold of the sidelink measurement between the first UE and the second UE, and the second predefined threshold is a maximum threshold of the sidelink measurement between the first UE and the second UE.

It should be noted that, in embodiments of the present disclosure, the above predefined threshold may be configured by the network side device, may be pre-configured, or may be obtained from a discovery solicitation signal sent by the source remote UE.

As an example, the first UE may obtain the predefined threshold based on a dedicated RRC signaling or SIB sent by the network side device.

As another example, different predefined thresholds may be configured for different RSCs in advance, the source remote UE may carry the RSCs in the sent discovery solicitation signal, so that the first UE may set a corresponding predefined threshold according to the received discovery solicitation signal.

In step S603: a discovery solicitation message sent by the second UE is forwarded, and/or a discovery response message sent by the third UE is forwarded, in response to the first UE being able to serve as the relay UE.

As an example, it is determined that the first UE is able to serve as a relay UE, according to the sidelink measurement between the first UE and the second UE and a predefined threshold, the discovery solicitation message sent by the second UE is forwarded.

As another example, it is determined that the first UE is able to serve as a relay UE, according to the sidelink measurement between the first UE and the third UE and the predefined threshold, the discovery response message sent by the third UE is forwarded.

As yet another example, it is determined whether the first UE is able to serve as the relay UE, according to the sidelink measurement between the first UE and the second UE, the sidelink measurement between the first UE and the third UE, and the predefined threshold; and the discovery solicitation message sent by the second UE is forwarded, and/or the discovery response message sent by the third UE is forwarded.

By implementing embodiments of the present disclosure, the first UE may determine whether it can serve as the relay UE according to the sidelink measurement between the first UE and the second UE and/or the third UE, and the predefined threshold, and forward a corresponding message of the second UE and/or the third UE after determining that it can serve as the relay UE. Therefore, other UEs can use the relay function of the first UE to perform the relay communication with the second UE and/or the third UE.

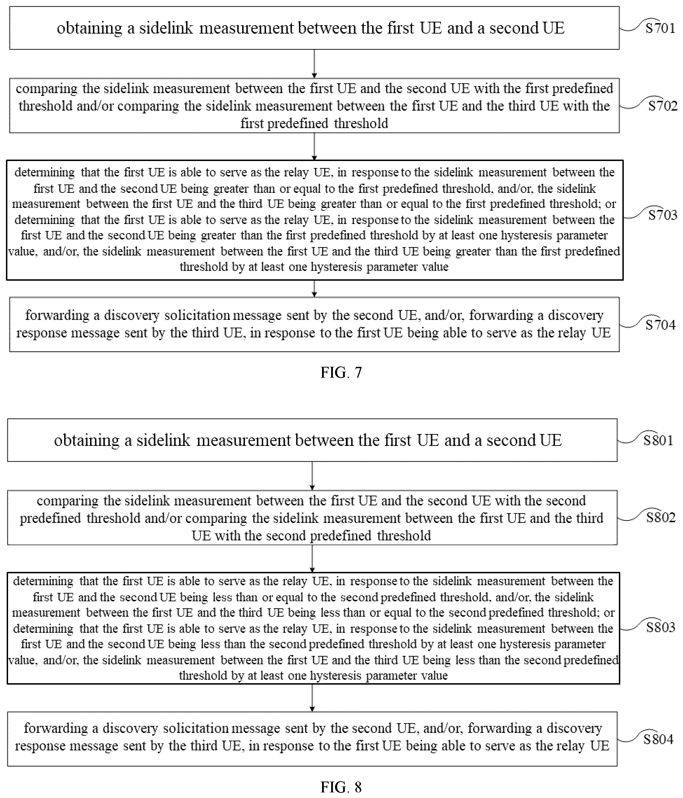

Referring to FIG. 7, FIG. 7 is yet another method for processing relay communication in a user equipment to user equipment (UE to UE) relay scenario provided by an embodiment of the present disclosure, and the method is performed by the first UE. As illustrated in FIG. 7, the method may include, but is not limited to, the following steps, which is preferably applied in the mode B scenario.

In step S701: a sidelink measurement between a first UE and a second UE and/or a third UE is obtained.

In embodiments of the present disclosure, step S701 may be realized in any one of the embodiments of the present disclosure, and embodiments of the present disclosure do not limit this, which will not be repeated.

In step S702: the sidelink measurement between the first UE and the second UE is compared with the first predefined threshold and/or the sidelink measurement between the first UE and the third UE is compared with the first predefined threshold.

As an example, the sidelink measurement is obtained between the first UE and the second UE, and the sidelink measurement is compared with the first predefined threshold.

As another example, the sidelink measurement is obtained between the first UE and the third UE, and the sidelink measurement is compared with the first predefined threshold.

As yet another example, the first sidelink measurement is obtained between the first UE and the second UE, the second sidelink measurement is obtained between the first UE and the third UE, and the first sidelink measurement and the second sidelink measurement are compared with the first predefined threshold.

It should be noted that, in embodiments of the present disclosure, when the obtained sidelink measurement is the SL-RSRP or the SD-RSRP, the steps of comparing the sidelink measurement between the first UE and the second UE with the first predefined threshold, and/or comparing the sidelink measurement between the first UE and the third UE with the first predefined threshold according to the sidelink measurement; when the obtained sidelink measurement includes the SL-RSRP and the SD-RSRP, the first terminal may randomly select one of the SL-RSRP and the SD-RSRP depending the implementation, to perform the step of comparing the sidelink measurement between the first UE and the second UE with the first predefined threshold, and/or comparing the sidelink measurement between the first UE and the third UE with the first predefined threshold.

In step S703, it is determined that the first UE is able to serve as the relay UE, in response to the sidelink measurement between the first UE and the second UE being greater than or equal to the first predefined threshold and/or the sidelink measurement between the first UE and the third UE being greater than or equal to the first predefined threshold; or it is determined that the first UE is able to serve as the relay UE, in response to the sidelink measurement between the first UE and the second UE being greater than the first predefined threshold by at least one hysteresis parameter value and/or the sidelink measurement between the first UE and the third UE being greater than the first predefined threshold by at least one hysteresis parameter value.

As an example, the sidelink measurement is obtained between the first UE and the second UE, it is determined that the first UE is able to serve as the relay UE, in response to the sidelink measurement being greater than or equal to the first predefined threshold.

As another example, the sidelink measurement is obtained between the first UE and the third UE, it is determined that the first UE is able to serve as the relay UE, in response to the sidelink measurement being greater than or equal to the first predefined threshold.

As yet another example, the first sidelink measurement is obtained between the first UE and the second UE, the second sidelink measurement is obtained between the first UE and the third UE, and it is determined that the first UE is able to serve as the relay UE, in response to the first sidelink measurement being greater than or equal to the first predefined threshold and the second sidelink measurement being greater than or equal to the first predefined threshold.

As yet another example, the sidelink measurement is obtained between the first UE and the second UE, it is determined that the first UE is able to serve as the relay UE, in response to the sidelink measurement being greater than the first predefined threshold by at least one hysteresis parameter value.

As yet another example, the sidelink measurement is obtained between the first UE and the third UE, it is determined that the first UE is able to serve as the relay UE, in response to the sidelink measurement being greater than the first predefined threshold by at least one hysteresis parameter value.

As yet another example, the first sidelink measurement is obtained between the first UE and the second UE, the second sidelink measurement is obtained between the first UE and the third UE, and it is determined that the first UE is able to serve as the relay UE, in response to the first sidelink measurement being greater than the first predefined threshold by at least one hysteresis parameter value and the second sidelink measurement being greater than the first predefined threshold by at least one hysteresis parameter value.

In step S704: a discovery solicitation message sent by the second UE is forwarded, and/or a discovery response message sent by the third UE is forwarded, in response to the first UE being able to serve as the relay UE.

In embodiments of the present disclosure, step S704 may be realized in any one of the embodiments of the present disclosure, and embodiments of the present disclosure do not limit this, which will not be repeated.

By implementing embodiments of the present disclosure, the first UE may determine whether it can serve as the relay UE according to the sidelink measurement between the first UE and the second UE and/or the third UE, and the first predefined threshold, and forward a corresponding message of the second UE and/or the third UE after determining that it can serve as the relay UE. Therefore, other UEs can use the relay function of the first UE to perform the relay communication with the second UE and/or the third UE.

Referring to FIG. 8, FIG. 8 is yet another method for processing relay communication in a user equipment to user equipment (UE to UE) relay scenario provided by an embodiment of the present disclosure, and the method is performed by the first UE. As illustrated in FIG. 8, the method may include, but is not limited to, the following steps, which is preferably applied in the mode B scenario.

In step S801: a sidelink measurement between a first UE and a second UE and/or a third UE is obtained.

In embodiments of the present disclosure, step S801 may be realized in any one of the embodiments of the present disclosure, and embodiments of the present disclosure do not limit this, which will not be repeated.

In step S802: the sidelink measurement between the first UE and the second UE is compared with the second predefined threshold and/or the sidelink measurement between the first UE and the third UE is compared with the second predefined threshold.

As an example, the sidelink measurement is obtained between the first UE and the second UE, and the sidelink measurement is compared with the second predefined threshold.

As another example, the sidelink measurement is obtained between the first UE and the third UE, and the sidelink measurement is compared with the second predefined threshold.

As yet another example, the first sidelink measurement is obtained between the first UE and the second UE, the second sidelink measurement is obtained between the first UE and the third UE, and the first sidelink measurement and the second sidelink measurement are compared with the second predefined threshold.

It should be noted that, in embodiments of the present disclosure, when the obtained sidelink measurement is the SL-RSRP or the SD-RSRP, the steps of comparing the sidelink measurement between the first UE and the second UE with the second predefined threshold, and/or comparing the sidelink measurement between the first UE and the third UE with the second predefined threshold according to the sidelink measurement; when the obtained sidelink measurement includes the SL-RSRP and the SD-RSRP, the first terminal may randomly select one of the SL-RSRP and the SD-RSRP depending the implementation, to perform the step of comparing the sidelink measurement between the first UE and the second UE with the second predefined threshold, and/or comparing the sidelink measurement between the first UE and the third UE with the second predefined threshold.

In step S803, it is determined that the first UE is able to serve as the relay UE, in response to the sidelink measurement between the first UE and the second UE being less than or equal to the second predefined threshold and/or the sidelink measurement between the first UE and the third UE being less than or equal to the second predefined threshold; or it is determined that the first UE is able to serve as the relay UE, in response to the sidelink measurement between the first UE and the second UE being less than the second predefined threshold by at least one hysteresis parameter value and/or the sidelink measurement between the first UE and the third UE being less than the second predefined threshold by at least one hysteresis parameter value.

As an example, the sidelink measurement is obtained between the first UE and the second UE, it is determined that the first UE is able to serve as the relay UE, in response to the sidelink measurement being less than or equal to the second predefined threshold.

As another example, the sidelink measurement is obtained between the first UE and the third UE, it is determined that the first UE is able to serve as the relay UE, in response to the sidelink measurement being less than or equal to the second predefined threshold.

As yet another example, the first sidelink measurement is obtained between the first UE and the second UE, the second sidelink measurement is obtained between the first UE and the third UE, and it is determined that the first UE is able to serve as the relay UE, in response to the first sidelink measurement being less than or equal to the second predefined threshold and the second sidelink measurement being less than or equal to the second predefined threshold.

As yet another example, the sidelink measurement is obtained between the first UE and the second UE, it is determined that the first UE is able to serve as the relay UE, in response to the sidelink measurement being less than the second predefined threshold by at least one hysteresis parameter value.

As yet another example, the sidelink measurement is obtained between the first UE and the third UE, it is determined that the first UE is able to serve as the relay UE, in response to the sidelink measurement being less than the second predefined threshold by at least one hysteresis parameter value.

As yet another example, the first sidelink measurement is obtained between the first UE and the second UE, the second sidelink measurement is obtained between the first UE and the third UE, and it is determined that the first UE is able to serve as the relay UE, in response to the first sidelink measurement being less than the second predefined threshold by at least one hysteresis parameter value and the second sidelink measurement being less than the second predefined threshold by at least one hysteresis parameter value.

In step S804: a discovery solicitation message sent by the second UE is forwarded, and/or a discovery response message sent by the third UE is forwarded, in response to the first UE being able to serve as the relay UE.

In embodiments of the present disclosure, step S804 may be realized in any one of the embodiments of the present disclosure, and embodiments of the present disclosure do not limit this, which will not be repeated.

By implementing embodiments of the present disclosure, the first UE may determine whether it can serve as the relay UE according to the sidelink measurement between the first UE and the second UE and/or the third UE, and the second predefined threshold, and forward a corresponding message of the second UE and/or the third UE after determining that it can serve as the relay UE. Therefore, other UEs can use the relay function of the first UE to perform the relay communication with the second UE and/or the third UE.

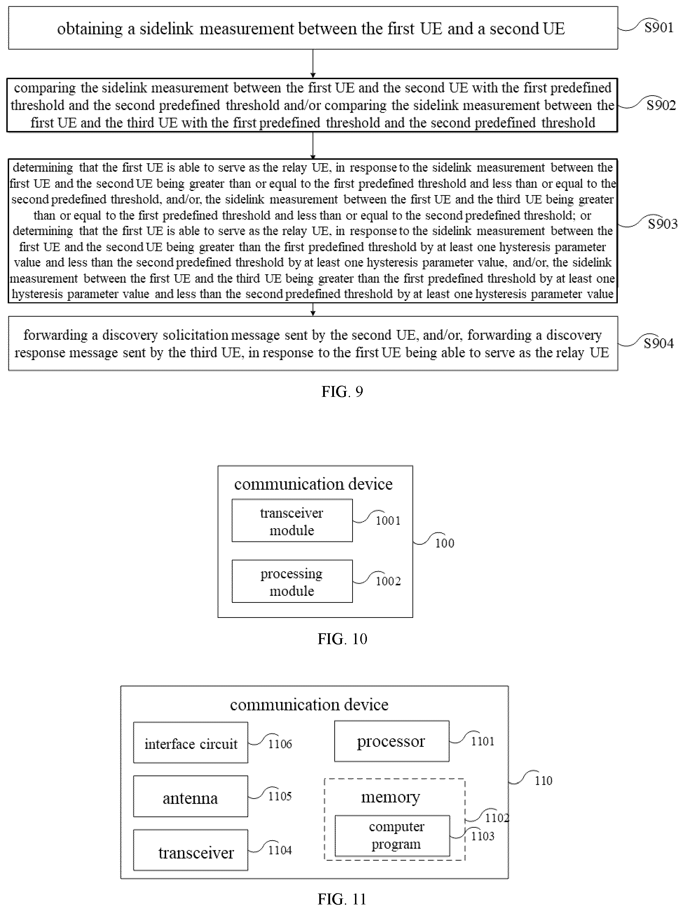

Referring to FIG. 9, FIG. 9 is yet another method for processing relay communication in a user equipment to user equipment (UE to UE) relay scenario provided by an embodiment of the present disclosure, and the method is performed by the first UE. As illustrated in FIG. 9, the method may include, but is not limited to, the following steps, which is preferably applied in the mode B scenario.

In step S901: the sidelink measurement between the first UE and the second UE and/or the third UE is obtained.

In embodiments of the present disclosure, step S901 may be realized in any one of the embodiments of the present disclosure, and embodiments of the present disclosure do not limit this, which will not be repeated.

In step S902: the sidelink measurement between the first UE and the second UE is compared with the first predefined threshold and the second predefined threshold and/or the sidelink measurement between the first UE and the third UE is compared with the first predefined threshold and the second predefined threshold.

As an example, the sidelink measurement is obtained between the first UE and the second UE, and the sidelink measurement is compared with the first predefined threshold, and the sidelink measurement is compared with the second predefined threshold.

As another example, the sidelink measurement is obtained between the first UE and the third UE, and the sidelink measurement is compared with the first predefined threshold, and the sidelink measurement is compared with the second predefined threshold.

As yet another example, the first sidelink measurement is obtained between the first UE and the second UE, the second sidelink measurement is obtained between the first UE and the third UE, the first sidelink measurement is compared with the first predefined threshold and the second predefined threshold, and the second sidelink measurement is compared with the first predefined threshold and the second predefined threshold.

It should be noted that, in embodiments of the present disclosure, when the obtained sidelink measurement is the SL-RSRP or the SD-RSRP, the steps of comparing the sidelink measurement between the first UE and the second UE with the first predefined threshold and the second predefined threshold, and/or comparing the sidelink measurement between the first UE and the third UE with the first predefined threshold and the second predefined threshold according to the sidelink measurement; when the obtained sidelink measurement includes the SL-RSRP and the SD-RSRP, the first terminal may randomly select one of the SL-RSRP and the SD-RSRP depending on the implementation, to perform the step of comparing the sidelink measurement between the first UE and the second UE with the first predefined threshold and the second predefined threshold, and/or comparing the sidelink measurement between the first UE and the third UE with the first predefined threshold and the second predefined threshold.

In step S903, it is determined that the first UE is able to serve as the relay UE, in response to the sidelink measurement between the first UE and the second UE being greater than or equal to the first predefined threshold and less than or equal to the second predefined threshold and/or the sidelink measurement between the first UE and the third UE being greater than or equal to the first predefined threshold and less than or equal to the second predefined threshold; or it is determined that the first UE is able to serve as the relay UE, in response to the sidelink measurement between the first UE and the second UE being greater than the first predefined threshold by at least one hysteresis parameter value and less than the second predefined threshold by at least one hysteresis parameter value and/or the sidelink measurement between the first UE and the third UE being greater than the first predefined threshold by at least one hysteresis parameter value and less than the second predefined threshold by at least one hysteresis parameter value.

As an example, the sidelink measurement is obtained between the first UE and the second UE, it is determined that the first UE is able to serve as the relay UE, in response to the sidelink measurement being greater than or equal to the first predefined threshold and the sidelink measurement being less than or equal to the second predefined threshold.

As another example, the sidelink measurement is obtained between the first UE and the third UE, it is determined that the first UE is able to serve as the relay UE, in response to the sidelink measurement being greater than or equal to the first predefined threshold and the sidelink measurement being less than or equal to the second predefined threshold.

As yet another example, the first sidelink measurement is obtained between the first UE and the second UE, the second sidelink measurement is obtained between the first UE and the third UE, and it is determined that the first UE is able to serve as the relay UE, in response to the first sidelink measurement being greater than or equal to the first predefined threshold and less than or equal to the second predefined threshold, and the second sidelink measurement being greater than or equal to the first predefined threshold and less than or equal to the second predefined threshold.

As yet another example, the sidelink measurement is obtained between the first UE and the second UE, it is determined that the first UE is able to serve as the relay UE, in response to the sidelink measurement being greater than the first predefined threshold by at least one hysteresis parameter value, and less than the second predefined threshold by at least one hysteresis parameter value.

As yet another example, the sidelink measurement is obtained between the first UE and the third UE, it is determined that the first UE is able to serve as the relay UE, in response to the sidelink measurement being greater than the first predefined threshold by at least one hysteresis parameter value, and less than the second predefined threshold by at least one hysteresis parameter value.

As yet another example, the first sidelink measurement is obtained between the first UE and the second UE, the second sidelink measurement is obtained between the first UE and the third UE, and it is determined that the first UE is able to serve as the relay UE, in response to the first sidelink measurement being greater than the first predefined threshold by at least one hysteresis parameter value and less than the second predefined threshold by at least one hysteresis parameter value, and the second sidelink measurement being greater than the first predefined threshold by at least one hysteresis parameter value and less than the second predefined threshold by at least one hysteresis parameter value.

It should be noted that in embodiments of the present disclosure, the hysteresis parameter value corresponding to the first predefined threshold and the hysteresis parameter value corresponding to the second predefined threshold may be the same or different.

In step S904: a discovery solicitation message sent by the second UE is forwarded, and/or a discovery response message sent by the third UE is forwarded, in response to the first UE being able to serve as the relay UE.

In embodiments of the present disclosure, step S904 may be realized in any one of the embodiments of the present disclosure, and embodiments of the present disclosure do not limit this, which will not be repeated.

By implementing embodiments of the present disclosure, the first UE may determine whether it can serve as the relay UE according to the sidelink measurement between the first UE and the second UE and/or the third UE, the first predefined threshold, and the second predefined threshold, and forward a corresponding message of the second UE and/or the third UE after determining that it can serve as the relay UE. Therefore, other UEs can use the relay function of the first UE to perform the relay communication with the second UE and/or the third UE.

Referring to FIG. 10, FIG. 10 is a structural block diagram of a communication device 100 provided by an embodiment of the present disclosure. The communication device 100 illustrated in FIG. 10 may include a transceiver module 1001 and a processing module 1002. The transceiver module 1001 may include a sending module and/or a receiving module, the sending module is configured to realize a sending function, the receiving module is configured to realize a receiving function, and the transceiver module 100 may realize a sending function and/or a receiving function.

The communication device 100 may be a first UE, a device in the first UE, or a device capable of being matched for use with the first UE.

The transceiver module 1001 is configured to obtain a sidelink measurement between the first UE and the second UE, in which the sidelink measurement includes the SL-RSRP and/or the SD-RSRP; and a processing module 1002 is configured to determine whether the first UE is able to serve as a relay UE, according to the sidelink measurement between the first UE and the second UE and a predefined threshold; and broadcast a notification message periodically, in response to the first UE being able to serve as the relay UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold, and the processing module 1002 is specifically configured to compare the sidelink measurement between the first UE and the second UE with the first predefined threshold; and determine that the first UE is able to serve as the relay UE, in response to the sidelink measurement between the first UE and the second UE being greater than or equal to the first predefined threshold or the sidelink measurement between the first UE and the second UE being greater than the first predefined threshold by at least one hysteresis parameter value.

In an optional implementation, the predefined threshold is the second predefined threshold, and the processing module 1002 is specifically configured to compare the sidelink measurement between the first UE and the second UE with the second predefined threshold; and determine that the first UE is able to serve as the relay UE, in response to the sidelink measurement between the first UE and the second UE being less than or equal to the second predefined threshold or the sidelink measurement between the first UE and the second UE being less than the second predefined threshold by at least one hysteresis parameter value.

In an optional implementation, the predefined threshold includes the first predefined threshold and the second predefined threshold, and the processing module 1002 is specifically configured to compare the sidelink measurement between the first UE and the second UE with the first predefined threshold and the second predefined threshold; and determine that the first UE is able to serve as the relay UE, in response to the sidelink measurement between the first UE and the second UE being greater than or equal to the first predefined threshold and less than or equal to the second predefined threshold or the sidelink measurement between the first UE and the second UE being greater than the first predefined threshold by at least one hysteresis parameter value and less than the second predefined threshold by at least one hysteresis parameter value.

By the device of the embodiments of the present disclosure, according to the acquired SL measurement between the first UE and the second UE and the predefined threshold, the first UE can determine whether the first UE itself can become a relay UE, so that whether a relay function can be provided for other UEs can be determined.

In some embodiments of the present disclosure, a transceiver module 1001 is configured to obtain a sidelink measurement between the first UE and the second UE and/or the third UE, in which the sidelink measurement includes the SL-RSRP and/or the SD-RSRP; and a processing module 1002 is configured to determine whether the first UE is able to serve as a relay UE, according to the sidelink measurement between the first UE and the second UE and/or the sidelink measurement between the first UE and the third UE, and a predefined threshold; and forward a discovery solicitation message sent by the second UE, and/or forward a discovery response message sent by the third UE, in response to the first UE being able to serve as the relay UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold; and the processing module 1002 is specifically configured to compare the sidelink measurement between the first UE and the second UE with the first predefined threshold, and/or compare the sidelink measurement between the first UE and the third UE with the first predefined threshold; determine that the first UE is able to serve as the relay UE, in response to the sidelink measurement between the first UE and the second UE being greater than or equal to the first predefined threshold and/or the sidelink measurement between the first UE and the third UE being greater than or equal to the first predefined threshold; or determine that the first UE is able to serve as the relay UE, in response to the sidelink measurement between the first UE and the second UE being greater than the first predefined threshold by at least one hysteresis parameter value and/or the sidelink measurement between the first UE and the third UE being greater than the first predefined threshold by at least one hysteresis parameter value.

In an optional implementation, the predefined threshold is the second predefined threshold; and the processing module 1002 is specifically configured to compare the sidelink measurement between the first UE and the second UE with the second predefined threshold, and/or compare the sidelink measurement between the first UE and the third UE with the second predefined threshold; determine that the first UE is able to serve as the relay UE, in response to the sidelink measurement between the first UE and the second UE being less than or equal to the second predefined threshold and/or the sidelink measurement between the first UE and the third UE being less than or equal to the second predefined threshold; or determine that the first UE is able to serve as the relay UE, in response to the sidelink measurement between the first UE and the second UE being less than the second predefined threshold by at least one hysteresis parameter value and/or the sidelink measurement between the first UE and the third UE being less than the second predefined threshold by at least one hysteresis parameter value.

In an optional implementation, the predefined threshold includes the first predefined threshold and the second predefined threshold; and the processing module 1002 is specifically configured to compare the sidelink measurement between the first UE and the second UE with the first predefined threshold and the second predefined threshold, and/or compare the sidelink measurement between the first UE and the third UE with the first predefined threshold and the second predefined threshold; determine whether the first UE is able to serve as the relay UE, in response to the sidelink measurement between the first UE and the second UE being greater than or equal to the first predefined threshold and less than or equal to the second predefined threshold and/or the sidelink measurement between the first UE and the third UE being greater than or equal to the first predefined threshold and less than or equal to the second predefined threshold; or determine that the first UE is able to serve as the relay UE, in response to the sidelink measurement between the first UE and the second UE being greater than the first predefined threshold by at least one hysteresis parameter value and less than the second predefined threshold by at least one hysteresis parameter value and/or the sidelink measurement between the first UE and the third UE being greater than the first predefined threshold by at least one hysteresis parameter value and less than the second predefined threshold by at least one hysteresis parameter value.

By the device of the embodiments of the present disclosure, the first UE may determine whether it can serve as the relay UE according to the sidelink measurement between the first UE and the second UE and/or the third UE, and the predefined threshold, to determine whether it can provide the relay function for other UEs.

Referring to FIG. 11, FIG. 11 is a block diagram of another communication device 110 provided by an embodiment of the present disclosure. The communication device 110 may be the first UE, or a chip, chip system, or processor, etc. that supports the first UE to implement the above method. The device may be configured to realize the methods described in the above method embodiments, and the details may be found in the description of the above method embodiments.

The communication device 110 may include one or more processors 1101. The processor 1101 may be a general purpose processor or a specialized processor, etc. This may be, for example, a baseband processor or a central processor. The baseband processor may be used to process the communication protocol as well as the communication data, and the central processor may be used to control the communication device (e.g., the base station, the baseband chip, the terminal device, the terminal device chip, the DU or the CU, etc.), execute the computer program, and process the data of the computer program.

Optionally, the communication device 110 may also include one or more memories 1102, on which a computer program 1103 may be stored, and the processor 1101 executes the computer program 1103 to cause the communication device 110 to perform the method described in the method embodiments described above. Optionally, data may also be stored in the memory 1102. The communication device 110 and the memory 1102 may be provided separately or may be integrated together.

Optionally, the communication device 110 may also include a transceiver 1104, and an antenna 11011. The transceiver 1104 may be referred to as a transceiver unit, a transceiver machine, or a transceiver circuit, etc., and is used to implement the sending and receiving functions. The transceiver 1104 may include a receiver and a transmitter, the receiver may be referred to as a receiving machine or a receiving circuit, etc., for implementing the receiving function, and the transmitter may be referred to as a transmitting machine or a transmitting circuit, etc., for implementing the sending function.

Optionally, the communication device 110 may also include one or more interface circuits 1106. The interface circuit 1106 is used to receive code instructions and transmit them to the processor 1101. The processor 1101 runs said code instructions to cause the communication device 110 to perform the method described in the method embodiments above.

The processor 1101 is configured to perform step S202 and step S203 of FIG. 2; perform step S302, step S303, and step S304 of FIG. 3; perform step S402, step S403, and step S404 of FIG. 4; perform step S502, step S503, and step S504 of FIG. 5; and perform step S602 and step S603 of FIG. 6; perform step S702, step S703 and step S704 of FIG. 7; perform step S802, step S803 and step S804 of FIG. 8; and perform step S902, step S903 and step S904 of FIG. 9. The transceiver 1104 is configured to perform step S201 of FIG. 2; perform step S301 of FIG. 3; perform step S401 of FIG. 4; perform step S501 of FIG. 5; and perform step S601 of FIG. 6; perform step S701 of FIG. 7; perform step S801 of FIG. 8; and perform step S901 of FIG. 9.

In an implementation, the processor 1101 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or the above transceiver circuit, interface or interface circuit may be used for signal transmission or delivery.

In one implementation, the processor 1101 may store a computer program, and the computer program running on the processor 1101 may cause the communication device 110 to perform the method described in the method embodiments above. The computer program may be solidified in the processor 1101, in which case the processor 1101 may be implemented by hardware.

In one implementation, the communication device 110 may include a circuit, and the circuit may realize the function of sending or receiving or communicating in the method embodiments above. The processor and transceiver described in the present disclosure may be implemented on integrated circuit (IC), analog IC, radio frequency integrated circuit (RFIC), mixed signal IC, application specific integrated circuit (ASIC), printed circuit board (PCB), electronic device, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The scope of the communication device described in the present disclosure is not limited thereto, and the structure of the communication device may not be limited by FIG. 11. The communication device may be a stand-alone device or may be part of a larger device. For example the communication device may be:
(1) a stand-alone integrated circuit IC, or chip, or chip system or subsystem;
(2) a collection having one or more ICs, optionally, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

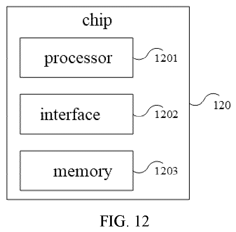

For the case where the communication device may be a chip or a chip system, see the block schematic diagram of the chip illustrated in FIG. 12. The chip 120 illustrated in FIG. 12 includes a processor 1201 and an interface 1202. The number of processors 1201 may be one or more, and the number of interfaces 1202 may be more than one.

The interface 1202 is configured to obtain a sidelink measurement between the first UE and the second UE, in which the sidelink measurement includes the SL-RSRP and/or the SD-RSRP; and a processor 1201 is configured to determine whether the first UE is able to serve as a relay UE, according to the sidelink measurement between the first UE and the second UE and a predefined threshold; and broadcast a notification message periodically, in response to the first UE being able to serve as the relay UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold, and the processor 1201 is specifically configured to compare the sidelink measurement between the first UE and the second UE with the first predefined threshold; and determine that the first UE is able to serve as the relay UE, in response to the sidelink measurement between the first UE and the second UE being greater than or equal to the first predefined threshold or the sidelink measurement between the first UE and the second UE being greater than the first predefined threshold by at least one hysteresis parameter value.

In an optional implementation, the predefined threshold is the second predefined threshold, and the processor 1201 is specifically configured to compare the sidelink measurement between the first UE and the second UE with the second predefined threshold; and determine that the first UE is able to serve as the relay UE, in response to the sidelink measurement between the first UE and the second UE being less than or equal to the second predefined threshold or the sidelink measurement between the first UE and the second UE being less than the second predefined threshold by at least one hysteresis parameter value.

In an optional implementation, the predefined threshold includes the first predefined threshold and the second predefined threshold, and the processor 1201 is specifically configured to compare the sidelink measurement between the first UE and the second UE with the first predefined threshold and the second predefined threshold; and determine that the first UE is able to serve as the relay UE, in response to the sidelink measurement between the first UE and the second UE being greater than or equal to the first predefined threshold and less than or equal to the second predefined threshold or the sidelink measurement between the first UE and the second UE being greater than the first predefined threshold by at least one hysteresis parameter value and less than the second predefined threshold by at least one hysteresis parameter value.

In some embodiments of the present disclosure, the interface 1202 is configured to obtain a sidelink measurement between the first UE and the second UE and/or the third UE, in which the sidelink measurement includes the SL-RSRP and/or the SD-RSRP; and the processor 1201 is configured to determine whether the first UE is able to serve as a relay UE, according to the sidelink measurement between the first UE and the second UE and/or the sidelink measurement between the first UE and the third UE, and a predefined threshold; and forward a discovery solicitation message sent by the second UE, and/or forward a discovery response message sent by the third UE, in response to the first UE being able to serve as the relay UE.

In an implementation, the predefined threshold includes a first predefined threshold and/or a second predefined threshold, the first predefined threshold is a minimum threshold, and the second predefined threshold is a maximum threshold.

In an optional implementation, the predefined threshold is the first predefined threshold; and the processor 1201 is specifically configured to compare the sidelink measurement between the first UE and the second UE with the first predefined threshold, and/or compare the sidelink measurement between the first UE and the third UE with the first predefined threshold; determine that the first UE is able to serve as the relay UE, in response to the sidelink measurement between the first UE and the second UE being greater than or equal to the first predefined threshold and/or the sidelink measurement between the first UE and the third UE being greater than or equal to the first predefined threshold; or determine that the first UE is able to serve as the relay UE, in response to the sidelink measurement between the first UE and the second UE being greater than the first predefined threshold by at least one hysteresis parameter value and/or the sidelink measurement between the first UE and the third UE being greater than the first predefined threshold by at least one hysteresis parameter value.

In an optional implementation, the predefined threshold is the second predefined threshold; and the processor 1201 is specifically configured to compare the sidelink measurement between the first UE and the second UE with the second predefined threshold, and/or compare the sidelink measurement between the first UE and the third UE with the second predefined threshold; determine that the first UE is able to serve as the relay UE, in response to the sidelink measurement between the first UE and the second UE being less than or equal to the second predefined threshold and/or the sidelink measurement between the first UE and the third UE being less than or equal to the second predefined threshold; or determine that the first UE is able to serve as the relay UE, in response to the sidelink measurement between the first UE and the second UE being less than the second predefined threshold by at least one hysteresis parameter value and/or the sidelink measurement between the first UE and the third UE being less than the second predefined threshold by at least one hysteresis parameter value.

In an optional implementation, the predefined threshold includes the first predefined threshold and the second predefined threshold; and the processor 1201 is specifically configured to compare the sidelink measurement between the first UE and the second UE with the first predefined threshold and the second predefined threshold, and/or compare the sidelink measurement between the first UE and the third UE with the first predefined threshold and the second predefined threshold; determine whether the first UE is able to serve as the relay UE, in response to the sidelink measurement between the first UE and the second UE being greater than or equal to the first predefined threshold and less than or equal to the second predefined threshold and/or the sidelink measurement between the first UE and the third UE being greater than or equal to the first predefined threshold and less than or equal to the second predefined threshold; or determine that the first UE is able to serve as the relay UE, in response to the sidelink measurement between the first UE and the second UE being greater than the first predefined threshold by at least one hysteresis parameter value and less than the second predefined threshold by at least one hysteresis parameter value and/or the sidelink measurement between the first UE and the third UE being greater than the first predefined threshold by at least one hysteresis parameter value and less than the second predefined threshold by at least one hysteresis parameter value.

Optionally, the chip further includes a memory 1203, and the memory 1203 is configured to store necessary computer programs and data.

A person skilled in the art may also appreciate that the various illustrative logical blocks and steps set forth in embodiments of the present disclosure may be implemented by electronic hardware, computer software, or a combination of both. Whether such a function is realized in hardware or software depends on the specific application and the design requirements of the overall system. For each particular application, a person skilled in the art may use various methods to implement the described function, but such implementations should not be construed as being outside the scope of protection of embodiments of the present disclosure.

The present disclosure also provides a readable storage medium having stored thereon instructions which, when executed by a computer, realize the functions of any of the method embodiments described above.

The present disclosure also provides a computer program product that, when executed by a computer, implements the function of any of the method embodiments described above.

In the above embodiments, this may be accomplished in whole or in part by software, hardware, firmware, or any combination thereof. When implemented using software, it may be implemented in whole or in part as a computer program product. The computer program product includes one or more computer programs. When loaded and executed on a computer, the computer program described herein produces, in whole or in part, a process or function in accordance with the processes described in embodiments of the present disclosure. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated. The available media described may be magnetic media (e.g., floppy disk, hard disk, tape), optical media (e.g., high-density digital video disc (DVD)), or semiconductor media (e.g., solid state disk (SSD)) and the like.

A person skilled in the art may understand that the first, second, and other various numerical numbers involved in the present disclosure are only described for the convenience of differentiation, and are not used to limit the scope of the embodiments of the present disclosure, and also indicate the order of precedence.

The at least one of the present disclosure may also be described as one or more, and the plurality may be two, three, four, or more, without limitation of the present disclosure. In embodiments of the present disclosure, for a type of technical feature, a technical feature of this type is distinguished by "first", "second", "third", "A", "B", "C", and "D", etc., and the technical features described by "first", "second", "third", "A", "B", "C" and "D" are not in any order of priority or magnitude.

The correspondences shown in the tables in the present disclosure may be configured or may be predefined. The values of the information in the tables are merely examples and may be configured to other values, which are not limited by this disclosure. When configuring the correspondence between the information and each parameter, it is not necessary to configure all the correspondences illustrated in each table. For example, certain rows of the table in the present disclosure illustrate correspondences that may also not be configured. As another example, appropriate distortion adjustments can be made based on the above table, e.g., splitting, merging, and so on. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present disclosure may be understood as defined, pre-defined, stored, pre-stored, pre-negotiated, pre-configured, solidified, or pre-fired.

A person of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A skilled person may use different methods for each particular application to implement the described functionality, but such implementations should not be considered outside the scope of the present disclosure.

It can be clearly understood by a person skilled in the art, for the convenience and brevity of the description, the specific working processes of the above-described systems, apparatuses, and units can be referred to the corresponding processes in the foregoing embodiments of the method, and will not be repeated herein.

The above-described are merely specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

## Claims

1. A method for processing relay communication in a user equipment to user equipment (UE to UE) relay scenario, performed by a first UE, comprising:
obtaining a sidelink measurement between the first UE and a second UE, wherein the sidelink measurement comprises sidelink reference signal receiving power (SL-RSRP) and/or sidelink-discovery reference signal receiving power (SD-RSRP);
determining whether the first UE is able to serve as a relay UE, according to the sidelink measurement between the first UE and the second UE and a predefined threshold; and
broadcasting a notification message periodically, in response to the first UE being able to serve as the relay UE.

2. The method according to claim 1, wherein the predefined threshold comprises a first predefined threshold and/or a second predefined threshold, the first predefined threshold is a minimum threshold, and the second predefined threshold is a maximum threshold.

3. The method according to claim 2, wherein the predefined threshold is the first predefined threshold, and determining whether the first UE is able to serve as the relay UE, according to the sidelink measurement between the first UE and the second UE and the predefined threshold comprises:
comparing the sidelink measurement between the first UE and the second UE with the first predefined threshold; and
determining that the first UE is able to serve as the relay UE, in response to the sidelink measurement between the first UE and the second UE being greater than or equal to the first predefined threshold or the sidelink measurement between the first UE and the second UE being greater than the first predefined threshold by at least one hysteresis parameter value.

4. The method according to claim 2, wherein the predefined threshold is the second predefined threshold, and determining whether the first UE is able to serve as the relay UE, according to the sidelink measurement between the first UE and the second UE and the predefined threshold comprises:
comparing the sidelink measurement between the first UE and the second UE with the second predefined threshold; and
determining that the first UE is able to serve as the relay UE, in response to the sidelink measurement between the first UE and the second UE being less than or equal to the second predefined threshold or the sidelink measurement between the first UE and the second UE being less than the second predefined threshold by at least one hysteresis parameter value.

5. The method according to claim 2, wherein the predefined threshold comprises the first predefined threshold and the second predefined threshold, and determining whether the first UE is able to serve as the relay UE, according to the sidelink measurement between the first UE and the second UE and the predefined threshold comprises:
comparing the sidelink measurement between the first UE and the second UE with the first predefined threshold and the second predefined threshold; and
determining that the first UE is able to serve as the relay UE, in response to the sidelink measurement between the first UE and the second UE being greater than or equal to the first predefined threshold and less than or equal to the second predefined threshold or the sidelink measurement between the first UE and the second UE being greater than the first predefined threshold by at least one hysteresis parameter value and less than the second predefined threshold by at least one hysteresis parameter value.

6. A method for processing relay communication in a user equipment to user equipment (UE to UE) relay scenario, performed by a first UE, comprising:
obtaining a sidelink measurement between the first UE and a second UE and/or a third UE, wherein the sidelink measurement comprises sidelink reference signal receiving power (SL-RSRP) and/or sidelink-discovery reference signal receiving power (SD-RSRP);
determining whether the first UE is able to serve as a relay UE, according to the sidelink measurement between the first UE and the second UE and/or the sidelink measurement between the first UE and the third UE, and a predefined threshold; and
forwarding a discovery solicitation message sent by the second UE, and/or forwarding a discovery response message sent by the third UE, in response to the first UE being able to serve as the relay UE.

7. The method according to claim 6, wherein the predefined threshold comprises a first predefined threshold and/or a second predefined threshold, the first predefined threshold is a minimum threshold, and the second predefined threshold is a maximum threshold.

8. The method according to claim 7, wherein the predefined threshold is the first predefined threshold, and determining whether the first UE is able to serve as the relay UE, according to the sidelink measurement between the first UE and the second UE and/or the sidelink measurement between the first UE and the third UE, and the predefined threshold comprises:
comparing the sidelink measurement between the first UE and the second UE with the first predefined threshold and/or comparing the sidelink measurement between the first UE and the third UE with the first predefined threshold; and
determining that the first UE is able to serve as the relay UE, in response to the sidelink measurement between the first UE and the second UE being greater than or equal to the first predefined threshold and/or the sidelink measurement between the first UE and the third UE being greater than or equal to the first predefined threshold; or
determining that the first UE is able to serve as the relay UE, in response to the sidelink measurement between the first UE and the second UE being greater than the first predefined threshold by at least one hysteresis parameter value and/or the sidelink measurement between the first UE and the third UE being greater than the first predefined threshold by at least one hysteresis parameter value.

9. The method according to claim 7, wherein the predefined threshold is the second predefined threshold, and determining whether the first UE is able to serve as the relay UE, according to the sidelink measurement between the first UE and the second UE and/or the sidelink measurement between the first UE and the third UE, and the predefined threshold comprises:
comparing the sidelink measurement between the first UE and the second UE with the second predefined threshold and/or comparing the sidelink measurement between the first UE and the third UE with the second predefined threshold; and
determining that the first UE is able to serve as the relay UE, in response to the sidelink measurement between the first UE and the second UE being less than or equal to the second predefined threshold, and/or, the sidelink measurement between the first UE and the third UE being less than or equal to the second predefined threshold; or
determining that the first UE is able to serve as the relay UE, in response to the sidelink measurement between the first UE and the second UE being less than the second predefined threshold by at least one hysteresis parameter value and/or the sidelink measurement between the first UE and the third UE being less than the second predefined threshold by at least one hysteresis parameter value.

10. The method according to claim 7, wherein the predefined threshold comprises the first predefined threshold and the second predefined threshold, and determining whether the first UE is able to serve as the relay UE, according to the SL-RSRP or the SD-RSRP obtained and the predefined threshold comprises:
comparing the sidelink measurement between the first UE and the second UE with the first predefined threshold and the second predefined threshold and/or comparing the sidelink measurement between the first UE and the third UE with the first predefined threshold and the second predefined threshold; and
determining that the first UE is able to serve as the relay UE, in response to the sidelink measurement between the first UE and the second UE being greater than or equal to the first predefined threshold and less than or equal to the second predefined threshold and/or the sidelink measurement between the first UE and the third UE being greater than or equal to the first predefined threshold and less than or equal to the second predefined threshold; or
determining that the first UE is able to serve as the relay UE, in response to the sidelink measurement between the first UE and the second UE being greater than the first predefined threshold by at least one hysteresis parameter value and less than the second predefined threshold by at least one hysteresis parameter value and/or the sidelink measurement between the first UE and the third UE being greater than the first predefined threshold by at least one hysteresis parameter value and less than the second predefined threshold by at least one hysteresis parameter value.

11. A communication device, comprising:
a transceiver module configured to obtain a sidelink measurement between a first UE and a second UE, wherein the sidelink measurement comprises sidelink reference signal receiving power (SL-RSRP) and/or sidelink-discovery reference signal receiving power (SD-RSRP); and
a processing module configured to determine whether the first UE is able to serve as a relay UE, according to the sidelink measurement between the first UE and the second UE and a predefined threshold; and broadcast a notification message periodically, in response to the first UE being able to serve as the relay UE.

12. A communication device, comprising:
a transceiver module configured to obtain a sidelink measurement between a first UE and a second UE and/or a third UE, wherein the sidelink measurement comprises sidelink reference signal receiving power (SL-RSRP) and/or sidelink-discovery reference signal receiving power (SD-RSRP); and
a processing module configured to determine whether the first UE is able to serve as a relay UE, according to the sidelink measurement between the first UE and the second UE and/or the sidelink measurement between the first UE and the third UE, and a predefined threshold; and forward a discovery solicitation message sent by the second UE, and/or forward a discovery response message sent by the third UE, in response to the first UE being able to serve as the relay UE.

13. A communication device, comprising: a processor, and a memory storing a computer program, wherein the processor executes the computer program stored in the memory to cause the user equipment to perform the method according to any one of claims 1 to 5, or 6 to 10.

14. A computer-readable storage medium configured to store instructions that, when the instructions are executed, cause the method according to any one of claims 1 to 5, or 6 to 10 to be implemented.
